# EUROPEAN PATENT APPLICATION

(11) **EP 2 296 330 A1**
(43) Date of publication of application: **16.03.2011**
(21) Application number: 09749464.5
(22) Date of filing: 20.05.2009
(51) Int. Cl.: H04L 27/26

(54) **A FRAMING METHOD AND A FRAMING DEVICE OF THE COMMON INTERLEAVED FRAME**

(30) Priority: 21.05.2008 CN 200810112080; 30.06.2008 CN 200810126005
(71) Applicant: Beijing Nufront Mobile Multimedia Tech. Co., Ltd., Beijing 100084 (CN)
(72) Inventor: BAO, Dongshan, Beijing 100084 (CN); LIU, Fei, Beijing 100084 (CN); ZHOU, Yubao, Beijing 100084 (CN); WANG, Bin, Beijing 100084 (CN)
(74) Representative: Delumeau, François Guy
(86) International application number: PCT/CN2009/071880
(87) International publication number: WO 2009/140921

(57) **Abstract**

A framing method of the common interleaved frame is provided, which includes the following steps: obtaining the position information of each sub-channel in the common interleaved frame; depositing data bits in each sub-channel accordingly based on the position information of each sub-channel and the number of bits comprised in the capacity unit CU; wherein the number of bits comprised in the CU is determined by a symbol mapping mode of each sub-channel. The method can help the skilled in the art to make a CIF with the data bits at the transmitter of the T-MMB system. A framing device of the common interleaved frame is also provided in the present invention.

## Description

### FIELD OF THE INVENTION

The present invention relates to a framing technology in a mobile communication system, and particularly to a framing method and a framing device of the common interleaved frame.

### BACKGROUND OF THE INVENTION

At present, the mainstream mobile TV/mobile multimedia broadcasting transmission standard around the world includes the Digital Audio Broadcast (DAB) series standard, the Digital Video Broadcasting Handheld (DVB-H) Specifications and the MediaFLO technology. As far as the channel bandwidth, the DAB series standard uses a mode of operation with a bandwidth of 1.712 MHz, while DVB-H and MediaFLO use a mode of operation with a bandwidth of 8 MHz. Since in the DAB system the mode of modulation is unitary and the rate for utilizing the frequency resource is low, the Terrestrial Mobile Multimedia Broadcasting (T-MMB) technology is proposed to overcome the drawbacks of the DAB system.

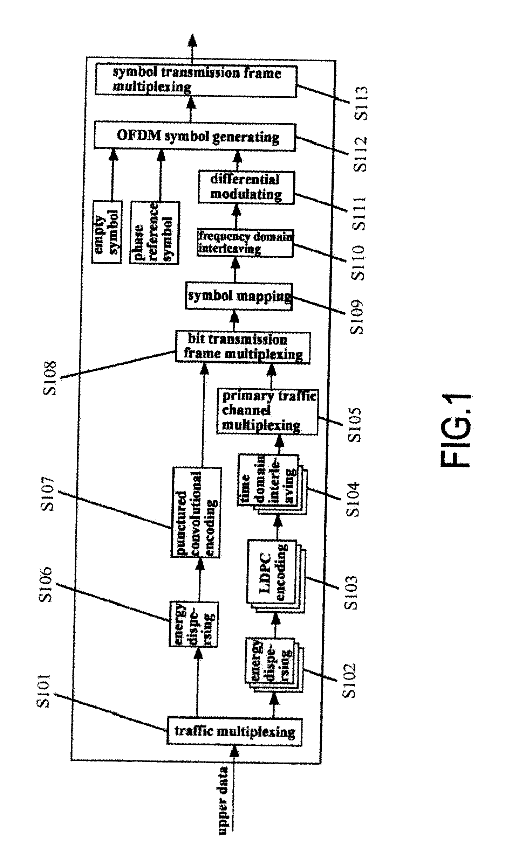

Fig. 1 shows the structure of a signal unit transmission frame generating module at the transmitter of the T-MMB system. The signal unit transmission frame generating module includes a traffic multiplexing unit S101, a plurality of first energy dispersing units S102, a plurality of low density parity check (LDPC) encoding units S103, a plurality of time domain interleaving units S104, a primary traffic channel multiplexing unit S105, a second energy dispersing unit S106, a punctured convolutional encoding unit S107, a bit transmission frame multiplexing unit S108, a symbol mapping unit S109, a frequency domain interleaving unit S110, a differential modulating unit S111, an OFDM symbol generating unit S112 and a symbol transmission frame multiplexing, unit S113.

The traffic multiplexing unit S101 is used to perform traffic multiplexing on the upper data to obtain the traffic data and the configuration information thereof. One first energy dispersing unit S102, LDPC encoding unit S103 and time domain interleaving unit S104 are connected in series to perform energy dispersing, LDPC encoding and time domain interleaving on the traffic data in one sub-channel. The primary traffic channel multiplexing unit S105 is used to compose a common interleaved frame (CIF) with the data bits output by the respective time domain interleaving unit S104, and then perform multiplexing on the resultant CIF.

The second energy dispersing unit S106 and the punctured convolutional encoding unit S107 are connected in series to perform energy dispersing and punctured convolutional encoding on the configuration information data obtained by the traffic multiplexing unit S101.

The bit transmission frame multiplexing unit S108 is used to perform bit transmission frame multiplexing on the data encoded by the punctured convolutional encoding unit S107 together with the CIF. The symbol mapping unit S109, the frequency domain interleaving unit S110 and the differential modulating unit S111 are used to perform symbol mapping, frequency domain interleaving and differential modulating on the bit stream of the resultant bit transmission frame respectively. The OFDM symbol generating unit S112 is used to generate the respective OFDM symbol from the differential modulation symbol sequence obtained by the differential modulating unit S111 together with the phase reference symbol and the empty symbol. The symbol transmission frame multiplexing unit S113 is used to multiplex the continuous OFDM symbols generated by the OFDM symbol generating unit S112 into a signal unit transmission frame.

There are many methods for the primary traffic channel multiplexing unit S105 to compose the CIF with data bits, but there is a need to propose a specific CIF framing method.

### SUMMARY OF THE INVENTION

In view of the above, the technical problem to be solved by the present invention is to provide a framing method of the CIF.

According to an embodiments of the present invention, a framing method comprises the steps of:
obtaining the position information of each sub-channel in a CIF;
depositing data bits in each sub-channel accordingly based on the position information of each sub-channel and the number of bits comprised in a CU;
wherein the number of bits comprised in the CU is determined by a symbol mapping mode of each sub-channel.

In some embodiments, when the symbol mapping mode of the sub-channel is Quadrature Phase Shift Keying (QPSK), the CU in the sub-channel comprises 64 bits.

In some embodiments, when the symbol mapping mode of the sub-channel is Octal Phase Shift Keying (8PSK), the CU in the sub-channel comprises 96 bits.

In some embodiments, when the symbol mapping mode of the sub-channel is 16-ary Phase Shift Keying (16PSK), the CU in the sub-channel comprises 128 bits.

In some embodiments, the framing method further comprises the step of, when sub-channels do not fill the whole CIF, filling the CU which has not been deposited with data bits with specific bits.

In some embodiments, the CU which has not been deposited with data bits is filled with specific bits based on the number of bits comprised in the CU of the proximate preceding sub-channel.

In some embodiments, the framing method further comprises the step of, if no sub-channel precedes the CU which has not been deposited with data bits, filling said CU with a preset number of bits.

In some embodiments, the framing method further comprises the step of, before depositing data bits in each sub-channel, obtaining the symbol mapping mode of each sub-channel and determining the number of bits comprised in the CU in each sub-channel.

In this context, said position information comprises the start position information and the number information of the CU in the sub-channel.

In an embodiment of a framing device of the CIF according to the present invention, the framing device comprises:
a first unit for obtaining the position information of each sub-channel in the CIF; and a second unit for depositing data bits in each sub-channel accordingly based on the position information of each sub-channel and the number of bits comprised in a CU, wherein the number of bits comprised in the CU is determined by the symbol mapping mode of each sub-channel.

In some embodiments, the framing device further comprises a fourth unit for filling the CU which has not been deposited with data bits with specific bits when sub-channels do not fill the whole CIF.

In some embodiments, the fourth unit fills the CU which has not been deposited with data bits with specific bits based on the number of bits comprised in the CU of the proximate preceding sub-channel.

In some embodiments, if no sub-channel precedes the CU which has not been deposited with data bits, the fourth unit is further used to fill said CU with a preset number of bits.

In some embodiments, the framing device further comprises a third unit for obtaining the symbol mapping mode of each sub-channel and determining the number of bits comprised in the CU in each sub-channel.

With the embodiments as mentioned above, it may be very convenient for the skilled in the art to realize composing the CIF with data bits at the transmitter of the T-MMB system.

### BRIEF DESCRIPTION OF THE DRAWING

Fig. 1 is a structural diagram showing a signal unit transmission frame generating module at the transmitter of the T-MMB system;
Fig. 2 is a flow chart illustrating an embodiment of the CIF framing method proposed in the present invention;
Fig. 3 is a schematic diagram showing a CIF framing;
Fig. 4 is a schematic diagram showing another CIF framing;
Fig. 5 is a schematic diagram showing an embodiment of the CIF framing device proposed in the present invention;
Fig. 6 is a schematic diagram showing another embodiment of the CIF framing device proposed in the present invention.

### DESCRIPTION OF THE PREFERRED EMBODIMENTS

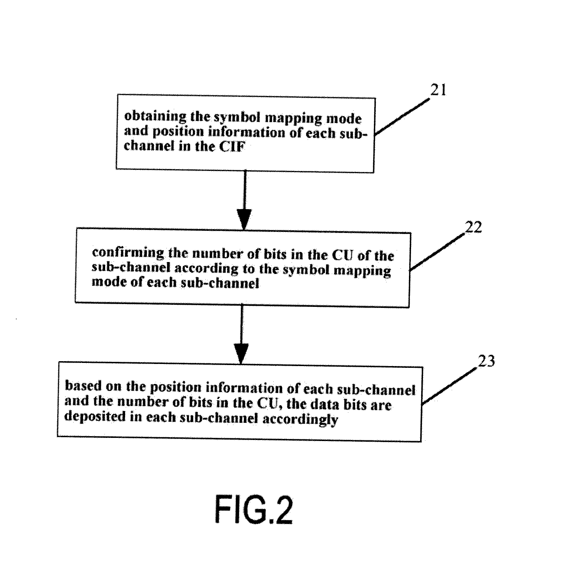

Fig. 2 shows an embodiment of a CIF framing method.

In step 21, the position information of each sub-channel in a CIF is obtained.

It is noted that, one CIF is composed of 864 capacity units (CUs), the one CIF comprises at least one sub-channel, and each sub-channel is composed of at least one CU. The sub-channel can not only be composed of continuous CUs, but can also be composed of discrete CUs. To realize the system in a convenient way, it is preferred that the sub-channel is composed of continuous CUs.

In the case that each sub-channel is composed of continuous CUs, the position information of the sub-channel mainly comprises the start position information of the CUs and number information of the CUs in the sub-channel. Since each sub-channel is composed of continuous CUs, once the start position of the CUs and the number of CUs in a certain sub-channel are obtained, the position of the sub-channel is known.

In step 22, the symbol mapping mode of each sub-channel in the CIF is obtained and the number of bits comprised in the CU of the sub-channel is determined.

In the T-MMB system, many kinds of symbol mapping modes are available. When different symbol mapping mode is applied to each sub-channel, the number of bits in a CU in each sub-channel is different. For example, when the symbol mapping mode of a sub-channel is QPSK, the CU in the sub-channel comprises 64 bits; when the symbol mapping mode of a sub-channel is 8PSK, the CU in the sub-channel comprises 96 bits; and when the symbol mapping mode of a sub-channel is 16PSK, the CU in the sub-channel comprises 128 bits.

In a particular implementation, as an alternative approach, the position information and the symbol mapping mode of each sub-channel are indicated in the configuration information, so that the position information and the symbol mapping mode of each sub-channel can be obtained from the configuration information.

After the position of each sub-channel and the number of bits in each CU are determined, data bits can be deposited in each sub-channel accordingly in step 23 based on the position information of each sub-channel and the number of bits comprised in the CU.

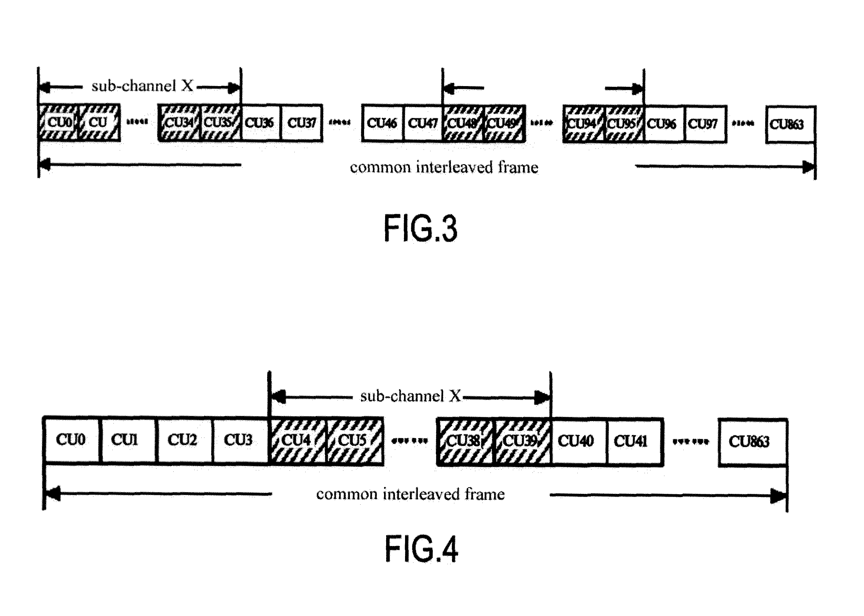

The CIF framing method will be illustrated in more details hereinafter with reference to Figs. 1 and 3.

It is assumed that a traffic data A with a source rate of V1 is transmitted over a sub-channel X, a traffic data B with a source rate of V2 is transmitted over a sub-channel Y; the symbol mapping on the sub-channel X is QPSK, and the symbol mapping on the sub-channel Y is 8PSK.

In the sub-channel X, after the energy dispersing, LDPC encoding and time domain interleaving are performed on the traffic data A, data bits are delivered to the primary traffic channel multiplexing unit S105. In the same way, in the sub-channel Y, after the energy dispersing, LDPC encoding and time domain interleaving are performed on the traffic data B, data bits are also delivered to the primary traffic channel multiplexing unit S105.

From the configuration information obtained from the traffic multiplexing unit S101, the start position and the number of CUs in the sub-channel X, the start position and the number of CUs in the sub-channel Y and the symbol mapping mode in the sub-channels X and Y in the CIF can be obtained.

When the symbol mapping mode of the sub-channel X is QPSK, the CU in the sub-channel X comprises 64 bits; and when the symbol mapping mode of the sub-channel Y is 8PSK, the CU in the sub-channel Y comprises 96 bits.

As shown in Fig. 3, based on the position information of the sub-channel X and the 64 bits comprised in the CU, the data bits of the traffic data A are deposited sequentially in respective CUs (CU0∼CU35) of the sub-channel X; based on the position information of the sub-channel Y and the 96 bits comprised in the CU, the data bits of the traffic data B are deposited in respective CUs (CU48∼CU95) of the sub-channel Y.

It is noted that, in the case that a CIF is composed of 864 CUs, there may be two situations in practical applications: in one case, sub-channels fill the whole CIF, i.e. all of the 864 CUs are deposited with data bits; while in the other case, sub-channels do not fill the whole CIF, i.e. some of the CUs are not deposited with data bits.

When sub-channels do not fill the whole CIF, as an alternative approach, the CU which has not been deposited with data bits may be filled with specific bits. Said CU which has not been deposited with data bits can be referred to as a free CU, and said specific bits can be referred to as filling bits.

It should be considered that how many filling bits each free CU should be deposited with. As an alternative approach, the number of filling bits of said free CU is determined based on the number of bits comprised in the CU of the preceding sub-channel proximate to the free CU. With reference to Fig. 3, as for each free CU (CU36∼CU47) following the sub-channel X and proximate to the sub-channel X, each free CU may be deposited with 64 filling bits; as for each free CU (CU96∼CU863) following the sub-channel Y and proximate to the sub-channel Y, each free CU may be deposited with 96 filling bits.

As for the free CUs at the start position of the CIF, there is no sub-channel that precedes these free CUs, such as CU0∼CU3 in Fig. 4. As for these free CUs, a number of bits M may be preset, and then the filling bits may be deposited in the free CUs at the start position of the CIF according to said preset number of bits M. Herein, M may be specified as required, for example M=64, or M=96 or M=128.

In the embodiment shown in Fig. 2, each sub-channel uses a different symbol mapping mode, and therefore the symbol mapping mode of each sub-channel should be indicated. However, when all of the sub-channels constantly use the same symbol mapping mode, since the system can know in advance the symbol mapping mode of each sub-channel, there is no need to indicate the symbol mapping mode of each sub-channel. In this case, the CIF framing can be accomplished by:
A1, obtaining the position information of each sub-channel in the CIF;
A2, depositing data bits in each sub-channel accordingly based on the position information of each sub-channel and the number of bits comprised in the CU, wherein the number of bits comprised in the CU is determined by the symbol mapping mode of each sub-channel. When all of the sub-channels constantly use QPSK, each CU in all of the sub-channels comprises 64 bits; when all of the sub-channels constantly use 8PSK, each CU in all of the sub-channels comprises 96 bits; and when all of the sub-channels constantly use 16PSK, each CU in all of the sub-channels comprises 128 bits.

In the case that a CIF is composed of 864 CUs, when sub-channels do not fill the whole CIF, as an alternative approach, said free CU is filled based on the number of bits comprised in the CU of the preceding sub-channel proximate to the free CU. When all of the sub-channels constantly use QPSK, each free CU may be deposited with 64 filling bit; when all of the sub-channels constantly use 8PSK, each free CU may be deposited with 96 filling bits; and when all of the sub-channels constantly use 16PSK, each free CU may be deposited with 128 filling bits.

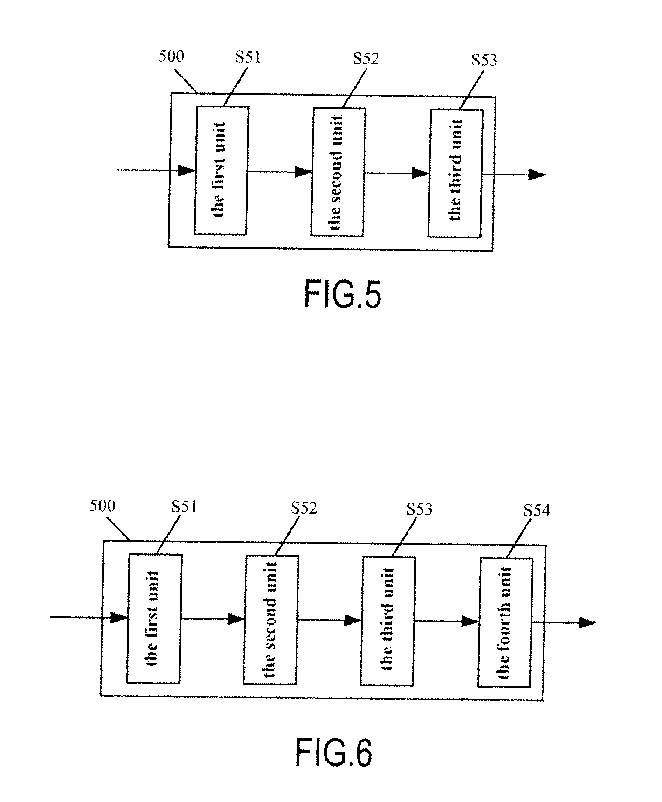

Fig. 5 illustrates an optional CIF framing device 500 which comprises a first unit S51, a second unit S52 and a third unit S53.

The first unit S51 is used to obtain the position information of each sub-channel in a CIF. The second unit S52 is used to obtain the symbol mapping mode of each sub-channel in the CIF and determine the number of bits comprised in the CU in the sub-channel. The third unit S53 is used to deposit data bits in each sub-channel accordingly based on the position information of each sub-channel and the number of bits comprised in the CU.

In this context, in the case that each sub-channel is composed of continuous CUs, the position information of the sub-channel mainly comprises the start position information of the CUs and the number information of the CUs in the sub-channel. Since each sub-channel is composed of continuous CUs, once the start position of the CUs and the number of CUs in a certain sub-channel is obtained, the position of the sub-channel is known.

In practical applications, the CIF framing device 500 may act as a portion of the primary traffic channel multiplexing unit S105. The CIF framing device will be illustrated in more details hereinafter with reference to Figs. 1 and 5.

It is assumed that a traffic data A with a source rate of V 1 is transmitted over a sub-channel X, a traffic data B with a source rate of V2 is transmitted over a sub-channel Y; the symbol mapping on the sub-channel X is QPSK, and the symbol mapping on the sub-channel Y is 8PSK.

In the sub-channel X, after the energy dispersing, LDPC encoding and time domain interleaving are performed on the traffic data A, data bits are delivered to the primary traffic channel multiplexing unit S105. In the same way, in the sub-channel Y, after the energy dispersing, LDPC encoding and time domain interleaving are performed on the traffic data B, data bits are also delivered to the primary traffic channel multiplexing unit S105.

From the configuration information obtained from the traffic multiplexing unit S101, the first unit S51 can obtain the start position and the number of CUs in the sub-channel X and the start position and the number of CUs in the sub-channel Y in the CIF.

The second unit S52 can obtain the symbol mapping mode of the sub-channels X and Y in the CIF and determine the number of bits comprised in the CU in the sub-channels X and Y. When the symbol mapping mode of the sub-channel X is QPSK, the CU in the sub-channel X comprises 64 bits; and when the symbol mapping mode in the sub-channel Y is 8PSK, the CU in the sub-channel Y comprises 96 bits.

As shown in Fig. 3, the third unit S53, based on the position information of the sub-channel X and the 64 bits comprised in the CU, deposits the data bits of the traffic data A sequentially in respective CUs (CU0∼CU35) of the sub-channel X; and based on the position information of the sub-channel Y and the 96 bits comprised in the CU, deposits the data bits oaf the traffic data B in respective CUs (CU48∼CU95) of the sub-channel Y.

It is noted that, in the case that a CIF is composed of 864 CUs, there may be two situations is practical applications: in one case, sub-channels fill the whole CIF; while in the other case, the sub-channels do not fill the whole CIF.

When the sub-channels do not fill the whole CIF, the CIF framing device 500 can further comprise a fourth unit S54, as shown in Fig. 6. When the sub-channels do not fill the whole CIF, the fourth unit S54 is used to fill the CU which has not been deposited with data bits with specific bits, i.e. to deposit the filling bits in all of the free CUs.

As an alternative approach, the fourth unit S54 determines the number of filling bits of said free CU based on the number of bits comprised in the CU of the preceding sub-channel proximate to the free CU. With reference to Fig. 3, as for each free CU (CU36∼CU47) following the sub-channel X and proximate to the sub-channel X, the fourth unit S54 may deposit each free CU with 64 filling bits; as for each free CU (CU96∼CU863) following the sub-channel Y and proximate to the sub-channel Y, the fourth unit S54 may deposit each free CU with 96 filling bits.

As for the free CUs at the start position of the CIF, there is no sub-channel that precedes these free CUs, such as CU0∼CU3 in Fig. 4. As for these free CUs, a number of bits M may be preset, and the fourth unit S54 may deposit filling bits in the free CUs at the start position of the CIF according to said preset number of bits M. Herein, M may be specified as required, for example M=64, or M=96 or M= 128.

If the embodiment shown in Fig. 5, each sub-channel uses a different symbol mapping mode, and therefore the symbol mapping mode of each sub-channel should be indicated. However, when all of the sub-channels constantly use the same symbol mapping mode, since the system can know in advance the symbol mapping mode of all sub-channels, there is no need to indicate the symbol mapping mode of each sub-channel. In this case, the second unit S52 can be omitted, and the CIF framing can be realized merely by the first unit S51 and the third unit S53.

When all of the sub-channels constantly use QPSK, each CU in all of the sub-channels comprises 64 bits; when all of the sub-channels constantly use 8PSK, each CU in all of the sub-channels comprises 96 bits; and when all of the sub-channels constantly use 16PSK, each CU in all of the sub-channels comprises 128 bits.

In the case that a CIF is composed of 864 CUs, when sub-channels do not fill the whole CIF, as an alternative approach, the fourth unit S54 fills said free CU based on the number of bits comprised in the CU of the preceding sub-channel proximate to the free CU. When all of the sub-channels constantly use QPSK, the fourth unit S54 may deposit each free CU with 64 filling bits; when all of the sub-channels constantly use 8PSK, the fourth unit S54 may deposit each free CU with 96 filling bits; and when all of the sub-channels constantly use 16PSK, the fourth unit S54 may deposit each free CU with 128 filling bits.

The present invention further provides an integrated circuit for implementing the device or method described in any of the above embodiments.

The present invention further provides a computer readable medium for storing programs for implementing the method described in any of the above embodiments.

It will be appreciated for the skilled in the art that various exemplary steps of method and units of device described with reference to the disclosed embodiments can be implemented by electronic hardware, software, or the combination thereof. To clearly show the interchangeability between hardware and software, a general description has been made to the various exemplary steps and units with respect to their functional forms. Whether this functionality is implemented by hardware or software depends on the specific application and the design constraints realized by the whole system. The skilled in the art may implement the described functionality in a variety of ways in connection with each specific application, but it should not be construed that this implementation departs from the scope of the present invention.

The exemplary units described in the embodiments disclosed herein can be implemented or fulfilled by means of a general purpose processor, a digital signal processor (DSP), an application specific integrated circuit (ASIC), a field programmable gate array (FPGA) or other programmable logic devices, a discrete gate or transistor logic, a discrete hardware assembly, or any combination thereof. The general purpose processor can be a microprocessor, but in another case the process can be any conventional processor, controller, microcontroller, or state machine. The processor can also be implemented as a combination of computing devices, for example, the combination of DSP and microprocessar, a plurality of microprocessors, one or more microprocessors incorporating the DSP core, or any other structures of this kind.

The steps of method described in the embodiments described hereinabove can be directly embodied as hardware, a software module executed by a processor, or the combination thereof. The software module can be stored in a RAM memory, a flash memory, a ROM memory, an EPROM memory, an EEPROM memory, a register, a hard disk, a removable disk, a CD-ROM, or any other kinds of storage media known in the art. A typical storage medium can be coupled with the processor so that the processor is capable of reading information from the storage medium and writing information to the storage medium. In alternative examples, the storage medium can be an integral part of the processor. The processor and the storage medium may reside in an ASIC. The ASIC may reside in a user station. In an alternative example, the processor and the storage medium can be separate components in the user station.

According to the disclosed embodiment, the skilled in the art is enabled to implement or carry out the present invention. As for the skilled in the art, the modifications to these embodiments are apparent, and the general principles defined herein can also be applied to other embodiments without departing from the scope and gist of the present invention. The embodiments described above are only the preferred embodiments of the present invention, and do not limit the present invention in any way. Any modification, equivalent, improvement or the like within the spirit and principle of the present invention should fall within the protection scope of the present invention.

## Claims

1. A framing method of a common interleaved frame, **characterized in that** the method comprises:
obtaining the position information of each sub-channel in the common interleaved frame;
depositing data bits in each sub-chtnnel accordingly based on the position information of each sub-channel and the number of bits comprised in a capacity unit (CU);
wherein the number of bits comprised in the CU is determined by a symbol mapping mode of each sub-channel.

2. A framing method according to claim 1, **characterized in that**, when the symbol mapping mode of the sub-channel is Quadrature Phase Shift Keying (QPSK), the CU in the sub-channel comprises 64 bits.

3. A framing method according to claim 1, **characterized in that**, when the symbol mapping mode of the sub-channel is Octal Phase Shift Keying (8PSK), the CU in the sub-channel comprises 96 bits.

4. A framing method according to claim 1, **characterized in that**, when the symbol mapping mode of the sub-channel is 16-ary Phase Shift Keying (16PSK), the CU in the sub-channel comprises 128 bits.

5. A framing method according to claim 1, **characterized in that**, the framing method further comprises the step of:
when sub-channels do not fill the whole common interleaved frame, filling the CU which has not been deposited with data bits with specific bits.

6. A framing method according to claim 5, **characterized in that**, the CU which has not been deposited with data bits is filled with specific bits based on the number of bits comprised in the CU of the proximate preceding sub-channel.

7. A framing method according to claim 6, **characterized in that**, the framing method further comprises the step of:
if no sub-channel precedes the CU which has not been deposited with data bits, filling said CU with a preset number of bits.

8. A framing method according to any of claims 1-7, **characterized in that**, the framing method further comprises the step of:
before depositing data bits in each sub-channel, obtaining the symbol mapping mode of each sub-channel and determining the number of bits comprised in the CU in each sub-channel.

9. A framing device of a common interleaved frame, **characterized in that**, the framing device comprises:
a first unit for obtaining the position information of each sub-channel in a common interleaved frame; and
a third unit for depositing data bits in each sub-channel accordingly based on the position information of each sub-channel and the number of bits comprised in a CU;
wherein the number of bits comprised in the CU is determined by a symbol mapping mode of each sub-channel.

10. A framing device according to claim 9, **characterized in that**, when the symbol mapping mode of the sub-channel is Quadrature Phase Shift Keying (QPSK), the CU in the sub-channel comprises 64 bits.

11. A framing device according to claim 9, **characterized in that**, when the symbol mapping mode of the sub-channel is Octal Phase Shift Keying (8PSK), the CU in the sub-channel comprises 96 bits.

12. A framing device according to claim 9, **characterized in that**, when the symbol mapping mode of the sub-channel is 16-ary Phase Shift Keying (16PSK), the CU in the sub-channel comprises 128 bits.

13. A framing device according to claim 9, **characterized in that**, the framing device further comprises:
a fourth unit for filling the CU which has not been deposited with data bits with specific bits when sub-channels do not fill the whole common interleaved frame.

14. A framing device according to claim 13, **characterized in that**, the fourth unit fills the CU which has not been deposited with data bits with specific bits based on the number of bits comprised in the CU of the proximate preceding sub-channel.

15. A framing device according to claim 14, **characterized in that**, if no sub-channel precedes the CU which has not been deposited with data bits, the fourth unit is further used to fill said CU with a preset number of bits.

16. A framing device according to any one of claims 9-15, **characterized in that**, the framing device further comprises:
a second unit for obtaining the symbol mapping mode of each sub-channel and determining the number of bits comprised in the CU in each sub-channel.
